# EUROPEAN PATENT SPECIFICATION

(11) **EP 1 209 849 B1**
(45) Date of publication and mention of the grant of the patent: **07.03.2007**
(21) Application number: 01308861.2
(22) Date of filing: 18.10.2001
(51) Int. Cl.: H04L 12/18

(54) **Apparatus for persistent chat sessions**
Vorrichtung für anhaltende Chatsitzungen
Dispositif pour des sessions de bavardage persistantes

(30) Priority: 19.10.2000 US 690460
(43) Date of publication of application: 29.05.2002
(73) Proprietor: International Business Machines Corporation, Armonk, NY 10504 (US)
(72) Inventor: Colson, James, c/o IBM United Kingdom Ltd., Winchester, Hampshire S021 2JN (GB); Eagle, Brian Lee White, IBM United Kingdom Ltd., Winchester, Hampshire S021 2JN (GB)
(74) Representative: Richards, John Peter

(56) References cited:
- GB-A- 2 368 225
- US-A- 5 440 624
- US-A- 6 105 055

## Description

### BACKGROUND OF THE INVENTION

### 1. Field of the Invention

The present invention relates to an apparatus for multiuser communication using chat sessions.

### 2. Description of Related Art

The amount of digital communication has grown exponentially along with the growth of the Internet. While most Internet-based personal communication is in the form of electronic mail, or e-mail, new forms of digital communication continue to be developed. Some types of communication that existed before the commercial use of the Internet have evolved into Web-based services, such as electronic bulletin boards that now exist as Web-based newsgroups. Other relatively new forms of communication, such as instant messaging and chat services, have also become quite common.

Each of these types of digital communication have their own characteristics that make one form of communication more desirable than another form of communication in a given circumstance. For example, newsgroups have the advantage of opening a discussion to a wide audience, possibly all Internet users. While an open newsgroup may draw a wider range of information in its posted responses, newsgroups have the disadvantage of not being private and of not having an implied time response period. In contrast, e-mail is relatively secure between two or more parties, and an implied etiquette allows one to assume that an e-mail message will be answered by a receiver of an e-mail message within a relatively short time period.

Instant messaging and chat services are relatively secure to the parties participating in a given communication session, yet these forms of communication also have the advantage of being a real-time form of communication. In fact, instant messaging services have become popular mainly as a real-time alternative to e-mail. A typical instant messaging service contains a subset of the functions of a typical chat service, and an instant messaging service can usually be considered as a type of simplified chat service between two users.

In addition to their differences in an implied response period and in a presence or absence of privacy, these various forms of communication also vary in their ability to provide a context for an ongoing discussion. Newsgroup messages can be stored for long periods of time, the length of which may be at the whim of the newsgroup moderator or the owner of the newsgroup server. The newsgroup messages are usually organized as a hierarchy of discussion threads that allows users to read previous messages within a thread in order to obtain a context for the current point of discussion.

Discussions that occur through e-mail may linger for long periods of time. A user might save e-mail messages for months in order to have an archive of a discussion that may have evolved over a period of months. These e-mail messages are usually placed into user-created folders that provide the user with an organizational hierarchy of messages, and the folders then represent threads and sub-threads of the discussion. While e-mail message folders do not have a self-organizing characteristic like newsgroups, some e-mail applications provide automatic filtering functions for helping to organize incoming e-mail.

In order to preserve a discussion thread, a user may also include an original message or string of messages in a reply message. By including the e-mail message history, one maintains the context of the discussion within the exchanged e-mail messages.

Both e-mail messages and newsgroup messages can be archived. Some instant messaging and chat services have a disadvantage of lacking a historical archive. Without an archive of past portions of a discussion, i.e., without a context, a new participant in a chat session cannot understand why a particular issue is currently being discussed. In addition, instant messaging and chat services also have a disadvantage of lacking a self-organizing characteristic similar to discussion threads in a newsgroup.

A prior art multimedia conferencing system with archiving functionality is disclosed in US patent 5 440 624. A participant who joins an existing conference may review the archived part of the ongoing conference.

Therefore, it would be advantageous to provide an apparatus for generating a historical archive for instant messaging and chat services.

### SUMMARY OF THE INVENTION

This object is met by the invention claimed in the appended claims. An embodiment of the invention provides persistent chat sessions. A user may select a user identifier of another user who is not a participant in the chat session and then request to invite the non-participant to join the chat session. A chat application then retrieves a chat session context for the chat session and places the chat session context into the chat session invitation. The invitation is then sent to the non-participant, who may review the chat session context in order to decide whether or not to join the chat session after reviewing the chat session context. A chat session context for a chat session may be stored or archived within a newsgroup, after which users may submit newsgroup messages that are also stored within the chat session context. A stored chat session context or a portion of a stored chat session context can be preloaded into a newly created chat session as a chat session context for the newly created chat session. A chat session context may be stored or presented as a hierarchically organized tree in which participating users in the chat session are represented as nodes of the tree and in which branches in the tree represent related chat sessions. A chat session context may also be stored or presented as a hierarchically organized tree in which discussion topics in the chat session are represented as nodes of the tree and in which branches in the tree represent related chat topics.

### BRIEF DESCRIPTION OF THE DRAWINGS

An embodiment of the invention will be described in conjunction with the accompanying drawings.
**Figure 1A** depicts a typical distributed data processing system in which the present invention may be implemented;
**Figure 1B** depicts a typical computer architecture that may be used within a data processing system in which the present invention may be implemented;
**Figure 2A** shows an example of a typical graphical user interface for a chat session;
**Figure 2B** shows an example of a typical invitation alert dialog box that requests a user's participation within a chat session;
**Figure 2C** shows an example of a typical graphical user interface for a chat session that would be seen after a new user has joined the chat session;
**Figure 3A** shows a chat session stored in a hierarchical tree structure in which the nodes of the tree represent the users of a chat session in accordance with a preferred embodiment of the present invention;
**Figure 3B** shows an expansion of the hierarchical tree structure shown in **Figure 3A**;
**Figure 3C** shows a further expansion of multiple chat sessions represented within a hierarchical tree structure;
**Figure 3D** shows a stored chat session represented as a hierarchical tree structure in which the nodes of the tree represent the topics of discussion within a chat session;
**Figure 3E** shows an expansion of the hierarchical tree structure shown in **Figure 3D**;
**Figure 3F** shows a selection of a subtopic within the hierarchical tree structure shown in **Figure 3E**;
**Figure 3G** shows a "flat view" of a stored chat session;
**Figure 3H** shows the processing options that are available to a user who wants to initiate a chat session;
**Figure 3I** shows an invitation dialog box for requesting a user's participation within a chat session including chat session context in accordance with a preferred embodiment of the present invention;
**Figures 3J-3K** show invitation alert dialog boxes that request a user's participation within a chat session in which each dialog box contains a chat session context in accordance with a preferred embodiment of the present invention;
**Figure 4** shows an example of an XML file containing a chat session context that may be transferred between chat session participants or that may be stored when archiving the chat session;
**Figure 5** is a block diagram depicting components within a chat application or chat applet;
**Figures 6A-6B** show graphical user interface windows for a messaging application that may be used to display e-mail messages, newsgroup messages, and chat session messages;
**Figure 7** is a flowchart depicting a method for using a chat session context in a chat session invitation that is sent to a non-participant user; and
**Figure 8** is a flowchart depicting a method for storing a chat session context within a newsgroup so that a discussion may continue by using newsgroup messages.

### DETAILED DESCRIPTION OF THE EMBODIMENT

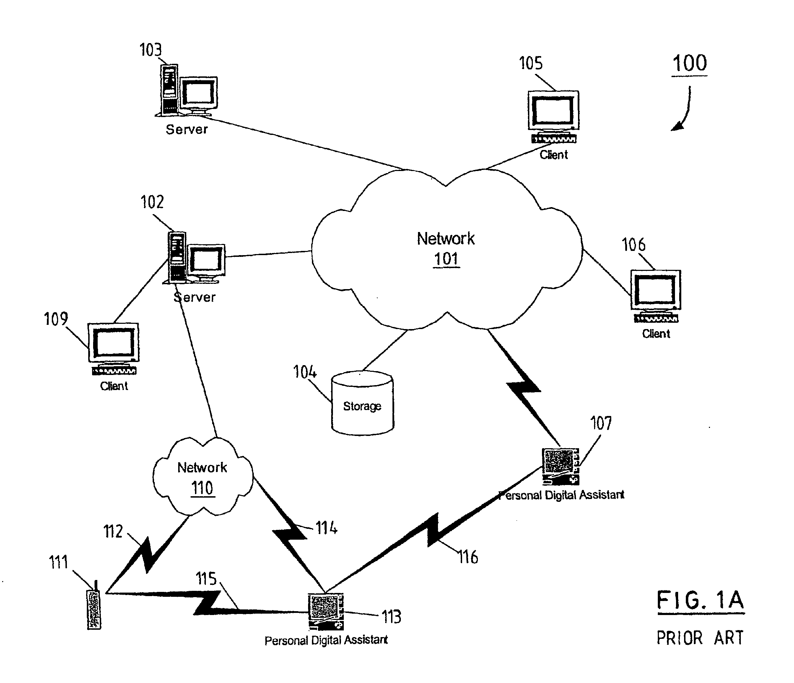

With reference now to the figures, **Figure 1A** depicts a typical network of data processing systems, each of which may implement the present invention. Distributed data processing system **100** contains network **101**, which is a medium that may be used to provide communications links between various devices and computers connected together within distributed data processing system **100**. Network **101** may include permanent connections, such as wire or fibre optic cables, or temporary connections made through telephone or wireless communications. In the depicted example, server **102** and server **103** are connected to network **101** along with storage unit **104**. In addition, clients **105-107** also are connected to network **101**. Clients **105-107** and servers **102-103** may be represented by a variety of computing devices, such as mainframes, personal computers, personal digital assistants (PDAs), etc. Distributed data processing system **100** may include additional servers, clients, routers, other devices, and peer-to-peer architectures that are not shown.

In the depicted example, distributed data processing system **100** may include the Internet with network **101** representing a worldwide collection of networks and gateways that use various protocols to communicate with one another, such as LDAP, TCP/IP, HTTP, etc. Of course, distributed data processing system **100** may also include a number of different types of networks, such as, for example, an intranet, a local area network (LAN), or a wide area network (WAN). For example, server **102** directly supports client **109** and network **110**, which incorporates wireless communication links. Network-enabled phone **111** connects to network **110** through wireless link **112**, and PDA **113** connects to network **110** through wireless link **114**. Phone **111** and PDA **113** can also directly transfer data between themselves across wireless link **115** using an appropriate technology, such as Bluetooth^{™} wireless technology, to create so-called personal area networks or personal ad-hoc networks. In a similar manner, PDA **113** can transfer data to PDA **117** via wireless communication link **116**.

The present invention could be implemented on a variety of hardware platforms; **Figure 1A** is intended as an example of a heterogeneous computing environment and not as an architectural limitation for the present invention.

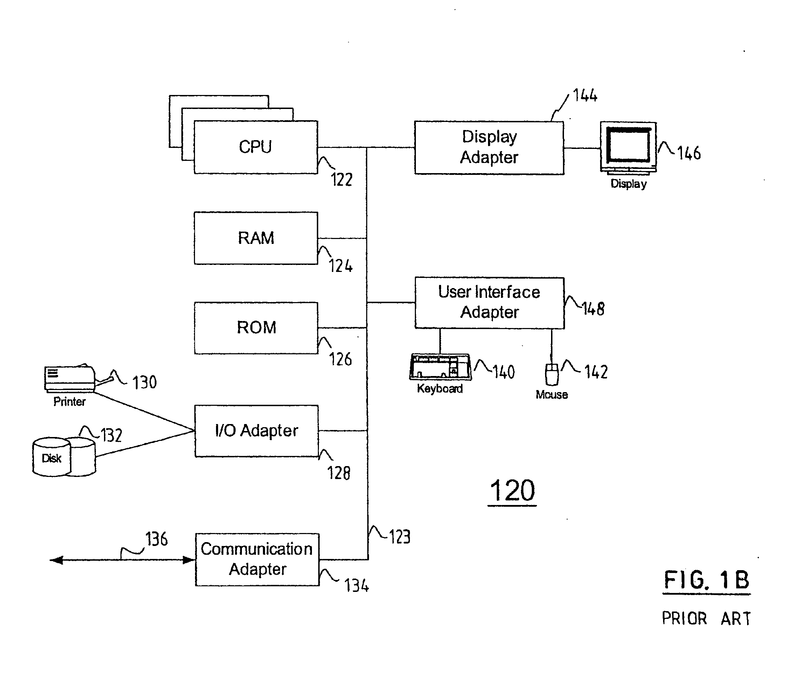

With reference now to **Figure 1B**, a diagram depicts a typical computer architecture of a data processing system, such as those shown in **Figure 1A**, in which the present invention may be implemented. Data processing system **120** contains one or more central processing units (CPUs) **122** connected to internal system bus **123**, which interconnects random access memory (RAM) **124,** read-only memory **126,** and input/output adapter **128,** which supports various I/O devices, such as printer **130,** disk units **132,** or other devices not shown, such as a sound system, etc. System bus **123** also connects communication adapter **134** that provides access to communication link **136**. User interface adapter **148** connects various user devices, such as keyboard **140** and mouse **142**, or other devices not shown, such as a touch screen, stylus, microphone, etc. Display adapter **144** connects system bus **123** to display device **146**.

Those of ordinary skill in the art will appreciate that the hardware in **Figure 1B** may vary depending on the system implementation. For example, the system may have one or more processors and one or more types of non-volatile memory. Other peripheral devices may be used in addition to or in place of the hardware depicted in **Figure 1B**. In other words, one of ordinary skill in the art would not expect to find similar components or architectures within a network-enabled phone and a fully featured desktop workstation. The depicted examples are not meant to imply architectural limitations with respect to the present invention.

In addition to being able to be implemented on a variety of hardware platforms, the present invention may be implemented in a variety of software environments. A typical operating system may be used to control program execution within each data processing system. For example, one device may run a Unix^{™} operating system, while another device contains a simple Java^{™} runtime environment. A representative computer platform may include a browser, which is a well known software application for accessing hypertext documents in a variety of formats, such as graphic files, word processing files, Extensible Markup Language (XML), Hypertext Markup Language (HTML), Handheld Device Markup Language (HDML), Wireless Markup Language (WML), and various other formats and types of files. Hence, it should be noted that the distributed data processing system shown in **Figure 1A** is contemplated as being fully able to support a variety of peer-to-peer subnets and peer-to-peer services.

The present invention may be implemented on a variety of hardware and software platforms, as described above. More specifically, though, the present invention is directed to providing a method and system for persistence of chat sessions. As background, a typical chat service is described before describing the present invention in more detail.

A chat session is a communication session between two or more users. Once a chat session has been initiated, a user may enter content into an application window within a graphical user interface, after which the user-generated content is placed into an appropriately formatted message or messages. These messages are then transmitted, broadcast, or delivered across a communication network to the other participants in the chat session in substantially real-time.

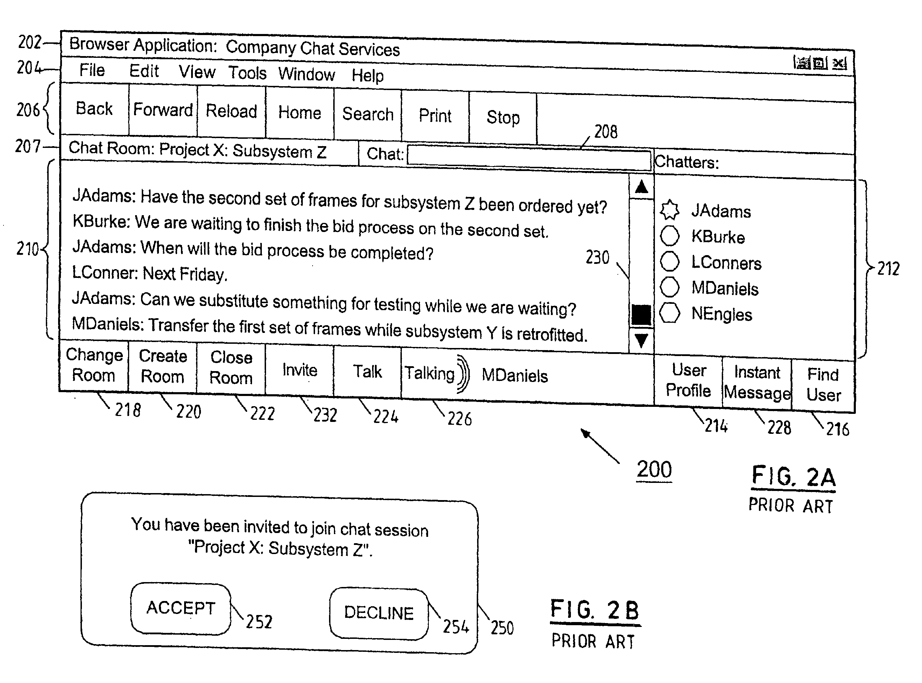

With reference now to **Figure 2A**, a diagram shows an example of a typical graphical user interface for a chat session. Chat services may support one or more chat sessions that involve many users accessing a global communications network in many geographical regions. Typically, a chat session is implemented using some type of metaphorical user interface, while chat sessions may also comprise voice messaging. For example, a chat session may occur within a chat room, which is a type of virtual conference room. A user can enter text by typing on a keyboard, and the entered text will appear on the monitors of all of the other participants in the chat session in a special section of an application window. The input from each participant is usually marked with some type of indicator showing which user has inputted each response, such as prefixing each response with the user identifier of the responder.

Window **200** is a typical browser application window, as labelled by title bar **202**. In this case, the main application window is a typical browser window running a chat applet within the browser. Menu bar **204** contains typical menus for controlling the application. Buttons **206** provide typical controls for commonly used browser functions. Alternatively, a dedicated application may be used solely for chatting or messaging purposes.

Label **207** provides the name of the current chat room, while text entry field **208** provides an area in which a user or chatter may input text that will appear within the chat room. Chat text area **210** contains the previous input in association with an identifier of the person who inputted a particular portion of the content.

Most chat services provide the ability to input a user identifier of a person who is not participating in a chat session and to invite the person to participate in the current chat session. Users can usually see a list of the participants who are in the chat room, and the list may change over time as users join or disjoin the chat session.

List **212** shows a list of the persons who are currently registered for the chat room and supposedly participating in the current discussion. Each user identifier may have other associated visual indicators that provide status information on the user's participation within the chat room. "User Profile" button **214** allows someone to obtain a user profile for a particular participant in order to learn more about the person, e.g., position within a company, location, etc., as appropriate for the context of the chat room. In this particular example, the chat session might be executing on a secure chat server within a corporation. By selecting or highlighting a user identifier in list **212** and the choosing "User Profile" button **214**, a user profile for the selected user can be retrieved. "Find User" button **216** performs a search for a user profile or user identifier, which could be performed by searching through an employee database.

"Change Room" button **218** allows a user to move from one chat room to another chat room. "Create Room" button **224** allows a user to create a new room, which may be used for spawning a related or an unrelated discussion from the current discussion that is occurring in the current chat room. The person that creates a room may have special controls visible only to the person that created the room, such as "Close Room" button **222**. Some chat services provide the ability to designate one or more users as discussion moderators who possess super-user privileges for controlling the participation of other users. Other chat services give special privileges to persons that create a chat room. In this manner, the chat room can be assumed to be self-moderating in that specially designated persons, such as the creator of the room, can maintain control of the execution of the chat room.

Many chat services are not text-only and incorporate other graphical, video, and audio features. Window **200** contains "Talk" button **224** for inputting voice data into a microphone that will be broadcast to the other participants. "Talking" indicator **226** shows the name of the user who is currently talking within the chat room. Typically, the talk feature works like a radio channel in which the users must regulate themselves from talking over each other. The chat session may be conducted solely using voice input and sound output.

Alternatively, the voice input may be converted to text, either on the sending client, the receiving client, or an intermediate server, before being either broadcast or displayed to other users. Conversely, any text that is received by another user may be converted into voice before playback for a given user. It is contemplated that the form of the presented data may vary at the option of the receiving user such that the user may control the manner in which data is presented to the user: only text; only voice; a mixture of text, video, and voice depending upon the sending user; automatic selection of data presentation options that depend upon the capabilities of the playback platform, etc. Hence, one of ordinary skill in the art will understand that the present invention is not limited by the format of the data that is input by a given user or output to a given user.

Instant messaging is a type of chat service that typically only allows two users to participate. A simple instant message application or window may contain a simple text display/output area, a text entry field, and a menu list of persons to whom a user frequently sends messages. After connecting with a another user, messages can be sent back and forth between the users. Instant messaging can be combined with a chat room so that users of the chat application can send quick messages to other users without interrupting the flow of the main discussion in the chat room in a manner similar to whispering between persons within a conference room. For example, window **200** contains "Instant Message" button **228**, which allows someone in the chat session to send another instant message to another person in the chat session.

Because a typical instant messaging service contains a subset of the functions of a typical chat service, instant messaging can be considered as a type of simplified chat service between two users. In fact, instant messaging services may provide voice capabilities and other non-text functionality. Hence, for the purposes of the present invention, an instant messaging service is considered to be equivalent to a chat session between two users.

Over time, a chat session can grow quite lengthy. Users can scroll through the text window to see past input from the participants. Chat text area **210** contains scroll bar **230** for allowing chat room users to scroll backward to read previous portions of the discussion.

At times within a discussion, it may become apparent that a particular person is not participating in the chat session yet is needed to answers questions and provide important input. Another user may be invited to join a particular chat session by using "Invite" button **232**. Assuming that the invited person is logged onto the system or has some sort of presence on a network, a special alert is presented to the invited person that requests his/her participation in the chat session.

With reference now to **Figure 2B**, a diagram shows an example of a typical invitation alert dialog box that requests a user's participation within a chat session. Window **250** is an invitation alert dialog showing the name of the chat session which the user is being requested to join. Buttons **252** and **254** allow the user to accept or decline the invitation, respectively.

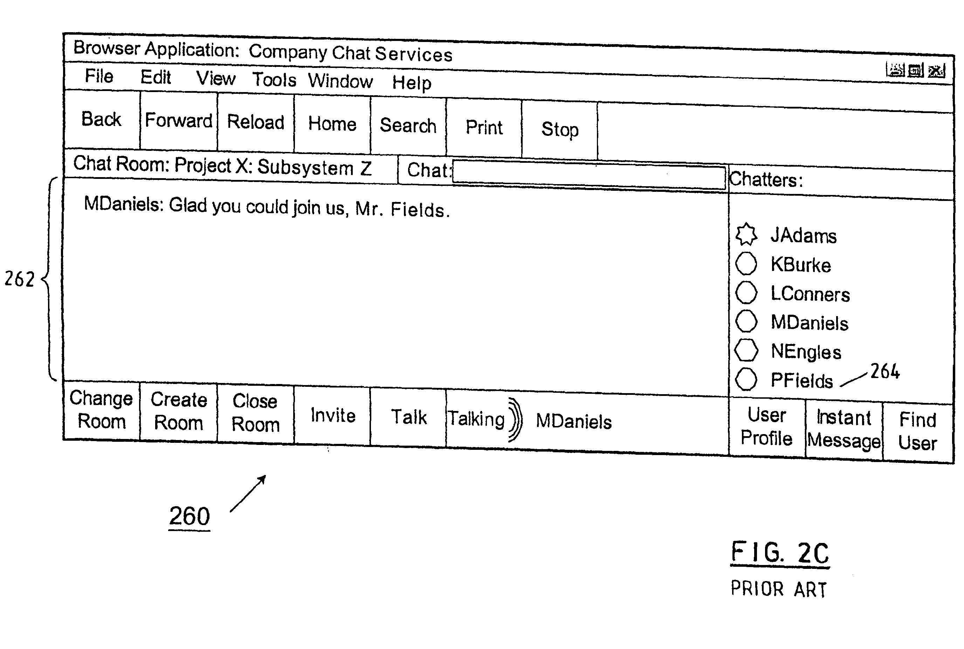

With reference now to **Figure 2C**, a diagram shows an example of a typical graphical user interface for a chat session that would be seen after a new user has joined the chat session. After a user has accepted an invitation to join a chat session, possibly via a dialog box as shown in **Figure 2B**, a chat session window is displayed to the user, such as window **260** in **Figure 2C**. Window **260** is similar to window **200** shown in **Figure 2A** except that window **260** is the display that would be seen by a user that has just joined the chat session. As can be seen, chat text area **262** in **Figure 2C** differs from chat text area **210** in **Figure 2A** in that chat text area 262 lacks a vertical scroll bar. Since the user identified by user identifier **264** has just joined the chat session, the chat application for this user does not have a historical record of the chat session. Hence, the new user would need to obtain a context for the current discussion by asking questions, being given a synopsis from one of the other participants, etc. A chat session context can be defined as the content of a chat session for some previous period of time at a given point in time.

As noted previously, discussions may occur in many forms over different discussion periods. A newsgroup may support a discussion over a long period of time while organising the threads of discussion to provide an adequate context for perusing the discussion. A discussion conducted by e-mail may occur over a short period of time, while a chat session may occur over an even shorter time period.

Typically, chat sessions are held as a substitute for formal conferences because of the informality allowed by chat sessions and the ability of a chat session to quickly disseminate a limited amount of information. However, the temporary nature of chat sessions presents certain problems.

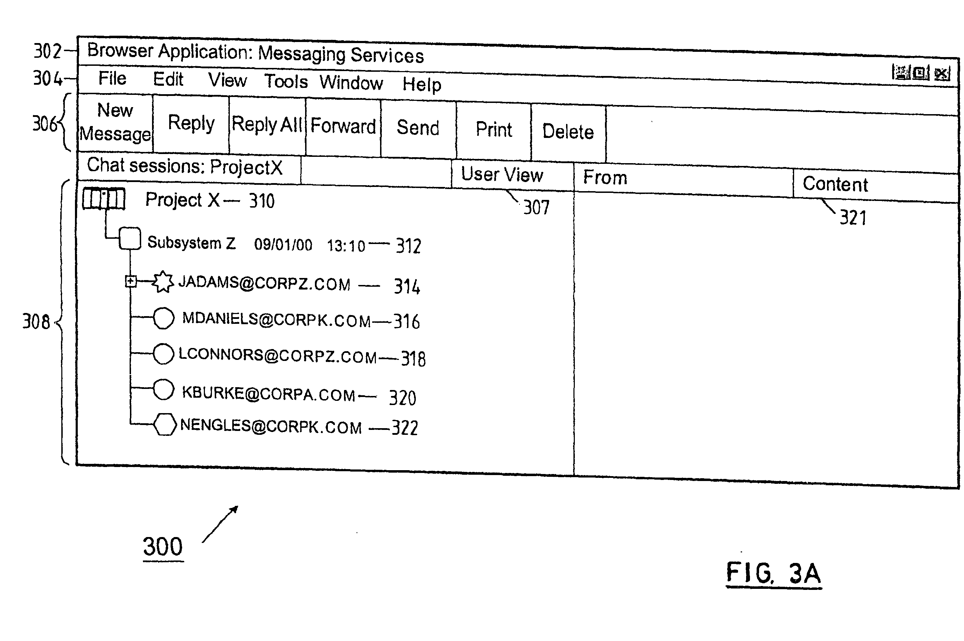

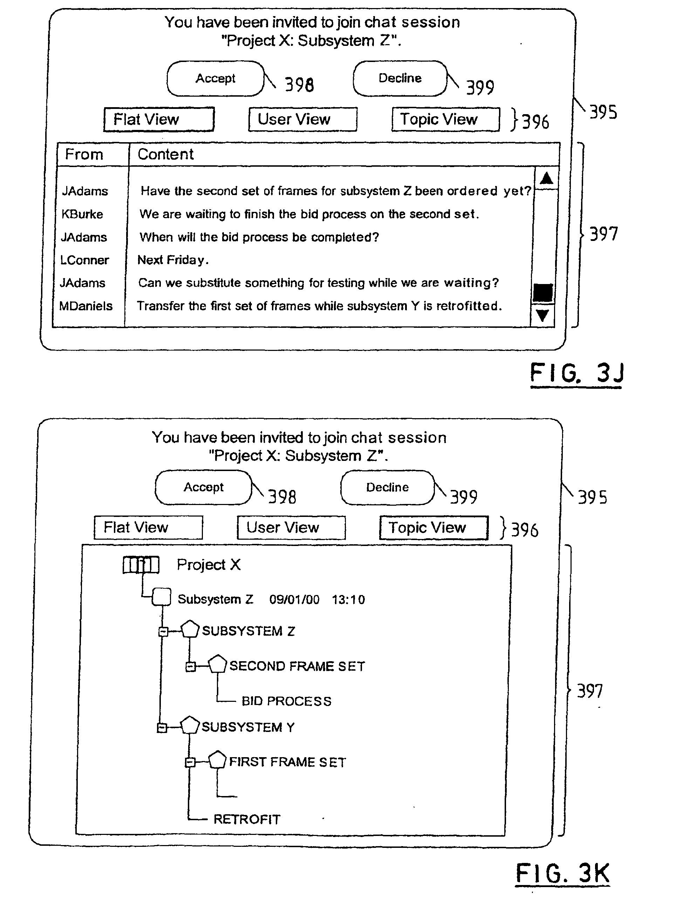

The present invention recognises the need for persistence of chat sessions and provides for particular methods for accomplishing persistence of chat sessions. The content of the chat session might contain important information that is not readily available elsewhere. After the participants are finished with their discussion within the chat session, the chat session is concluded by saving the content of the chat session. Chat sessions may be stored in a variety of forms that allow users to access the content of the chat session after the active chat session has concluded. Users may then refer to information within the stored chat session for a variety of purposes. **Figures 3A-3G** show several examples of viewing a previously stored chat session. The structure of a stored or archived chat session and the method by which it is stored is discussed in more detail further below.

With reference now to **Figure 3A**, a diagram shows a chat session stored in a hierarchical tree structure in which the nodes of the tree represent the users of a chat session. Similar numerals throughout **Figures 3A-3G** refer to similar features within the figures.

Window **300** is a browser application window, as labelled by title bar **302**. In this example, the main application window is a browser window running a messaging services applet within the browser. Alternatively, a dedicated application may be used.

Menu bar **304** contains typical menus for controlling the application. Buttons **306** provide typical controls for commonly used messaging functions. "User View" label **307** indicates that the content of the chat session is being displayed according to the participants of the selected chat session. Alternatively, label **307** may be replaced by a button that allows the user to select a view of chat content area **308** according to other organisational categories rather than by the users (or chatters) that participated in a particular chat session. The significance of using the messaging services application and the user view is explained in more detail further below.

Chat content area **308** contains a hierarchy of the participants in stored chat sessions. Label **310** provides the category of the chat session that is currently being viewed. Label **312** contains the name of a particular chat session, under this category, as given by the creator of the chat session. In this example, the user indicators are the e-mail addresses of each person for a chat session that occurred amongst several companies, possibly over the Internet. Alternatively, other types of user identifiers may be used, such as logon identifiers, etc. The creator of the chat session, as shown by user identifier **314**, is placed first; the other participants of the chat session, as shown by user identifiers **316-320**, are placed in the chronological order in which the users joined.

Each participant within the chat content area may be selected to reveal the detailed content associated with the selected participant. The content may be displayed under "Content" column **321**.

The hierarchical tree of user identifiers also shows that that the tree branch associated with user identifier **314** is expandable to reveal further information; similar tree structures for file folder hierarchies are well known within graphical user interfaces. In this example, user identifier **322** is included in the list of participants to show that the user who is identified by this user identifier was invited to join the chat session but declined or failed to respond. Special graphical indicators may be used to indicate chat-related information, and other information may also be shown within the chat session area, such as the creation date and time for the chat session, which user was responsible for inviting another user, etc. This information may be obtained by opening menus, clicking alternate mouse buttons (e.g., clicking on appropriate icons using a right mouse button on a right-handed mouse), etc.

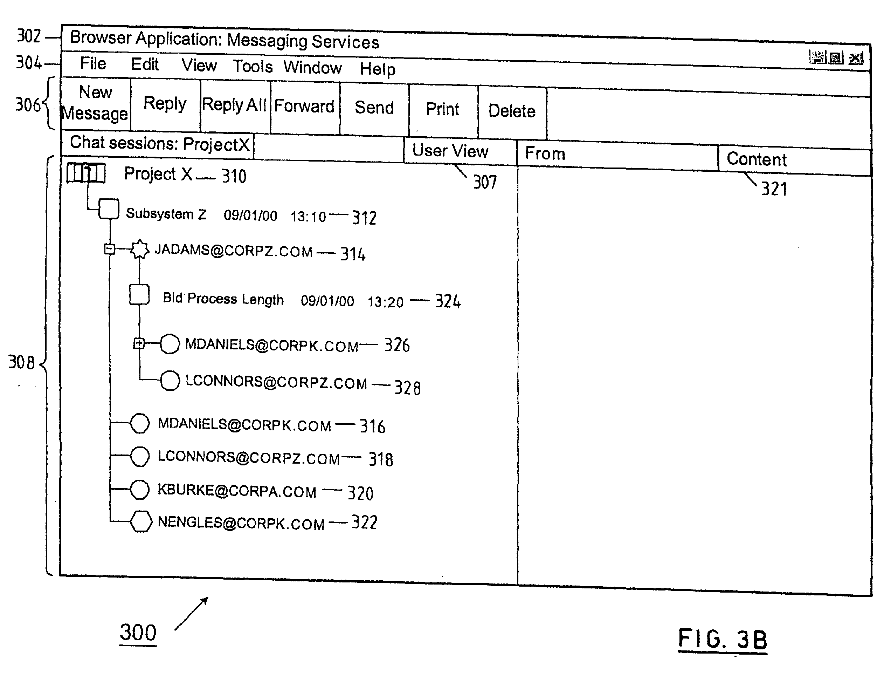

With reference now to **Figure 3B**, a diagram shows an expansion of the hierarchical tree structure shown in **Figure 3A.** The tree branches represent additional chat sessions that were spawned from the main chat session while the nodes of the tree represent users who participated in the chat session represented as a particular branch of the tree. **Figure 3B** differs from **Figure 3A** in that **Figure 3B** shows additional branches in the hierarchical tree, thereby revealing chat session related to the parent chat session and its participating user identifiers.

As noted above with respect to **Figure 3A**, the hierarchical tree of user identifiers shows that the tree branch associated with user identifier **314** is expandable to reveal further information. In **Figure 3B**, the tree branch associated with user identifier **314** has been expanded to reveal a child chat session identified by label **324** containing participants identified by user identifiers **326** and **328**. In this example, the user associated with user identifier **314** has spawned an additional chat session from the parent chat session identified by label **312**. The child chat session is then shown in a subordinate manner within the tree.

The users that are associated with user identifiers **326** and **328** are the same as the users that are associated with user identifiers **316** and **318**. In this example, these users and the user associated with user identifier **314** have participated in multiple simultaneous chat sessions.

For example, given the nature of most conferences, some participants are only marginally interested in a specific topic at a given time. During a main discussion among a large number of people, a participant in a chat session may desire to start another discussion that is related to the main discussion but much more focused. Because the new discussion may require much fewer participants than the main discussion, a participant in the main discussion can start another chat session and invite a subset of participants from the main discussion to participate in the new discussion. By starting a new discussion, the participants work more efficiently by being involved in two related discussions simultaneously. In addition, since other participants would not be interested in the new discussion, the logical flow of the main discussion is not disturbed by tangential matters.

By creating a new chat session, the new discussion is contained, yet the new chat session can be associated with the main chat session in a parent-child relationship. The event of spawning child chat sessions can be recorded and used as branching points within a hierarchical tree of chat sessions with the nodes of the tree representing the participants in each chat session. A methodology for creating the tree of chat sessions shown in **Figures 3A-3C** is described below in more detail.

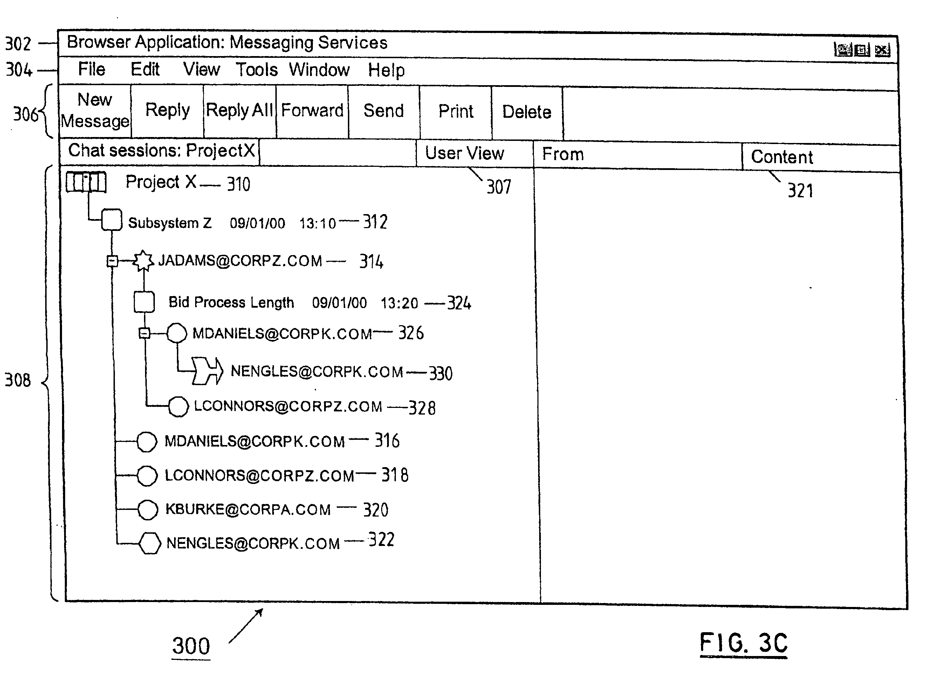

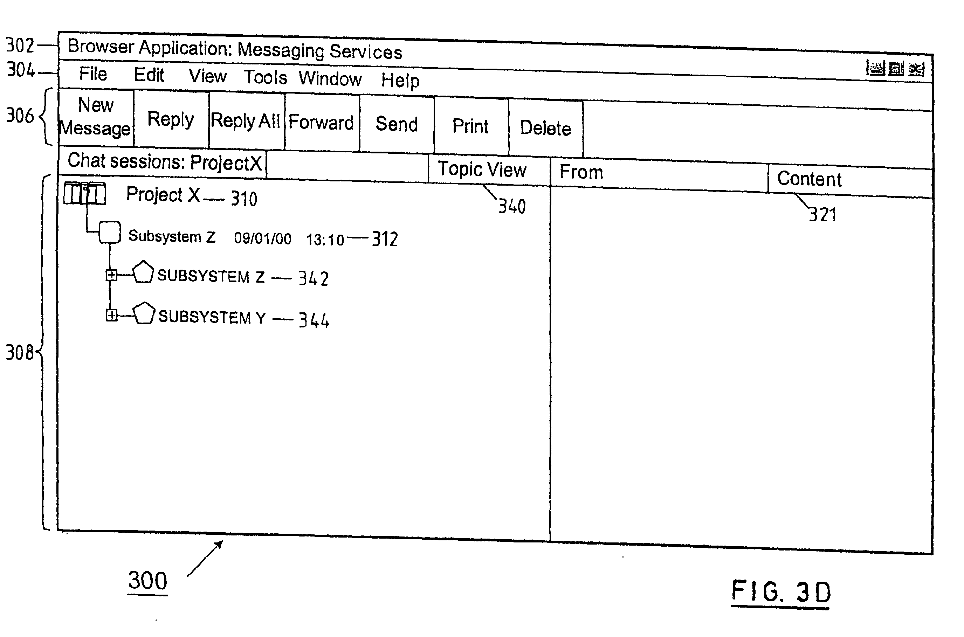

With reference now to **Figure 3C**, a diagram shows a further expansion of multiple related chat sessions represented within a hierarchical tree structure. In **Figure 3C**, the tree branch associated with user identifier **326** has been expanded to reveal user identifier **330**. In this example, the user associated with user identifier **326** has spawned an additional child chat session, identified by user identifier **330**, from its parent chat session identified by label **326**. The child chat session is then shown in a subordinate manner within the tree.

In this case, the additional child chat session is unnamed and contains only one subordinate user identifier. The newly revealed chat session may have been an instant message exchange between two users, which might be shown by displaying a special graphical indicator. In this case, user identifier **330** is the same as user identifier **322**, which might be explained by noting that the user associated with user identifiers **322** and **330** was available to participate in the main chat session but declined an invitation, yet the user then communicated with one of the participants of the chat session by answering queries in an exchange of instant messages.

With reference now to **Figure 3D**, a diagram shows a stored chat session represented as a hierarchical tree structure in which the nodes of the tree represent the topics of discussion within a chat session. Similar numerals throughout **Figures 3A-3G** refer to similar features within the figures. However, in **Figure 3D**, chat content area **308** contains the content of a previously stored chat session, similar to chat content area **308** in **Figure 3A**. Label **310** provides the category of the chat session that is currently being viewed. Label **312** contains the name of a particular chat session under this category, as given by the creator of the chat session either when the chat session was created or when the chat session was saved or stored.

However, in **Figure 3D**, the content of the chat session has been organised by the topics that were discussed during the chat session, rather than the participants who participated in the chat session, as in **Figure 3A**. This display change is indicated by "Topic View" label **340.** Again, the user may change the displayed view by selecting an appropriate menu, button, etc. The present invention may incorporate additional or alternative views of archived chat sessions other than "User View" and "Topic View". Other types of information may also be stored and displayed in association with the chat sessions, and the above examples should not be interpreted as limiting the types and views of information in the present invention.

In the example shown in **Figure 3D**, topics **342** and **344** are shown in chat content area **308**. These subtopics have been obtained from the content of the chat session in a manner which is explained in more detail further below.

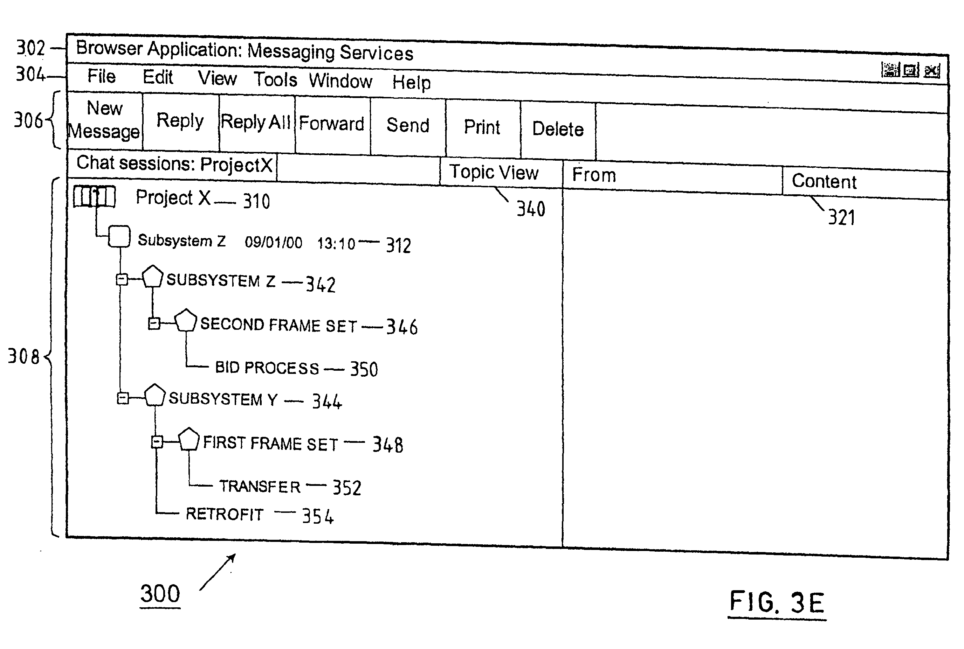

With reference now to **Figure 3E**, a diagram shows an expansion of the hierarchical tree structure shown in **Figure 3D**. As previously shown in **Figure 3D**, an archived chat session can be presented as a hierarchical tree structure in which the nodes of the tree represent the topics of discussion within a chat session. In **Figure 3E**, topics **342** and **344** have been expanded to reveal subtopics **346-352**. The topics and subtopics within the chat content area may be selected to reveal the detailed content associated with the selected topic or subtopic. The content may be displayed under "Content" column **321**.

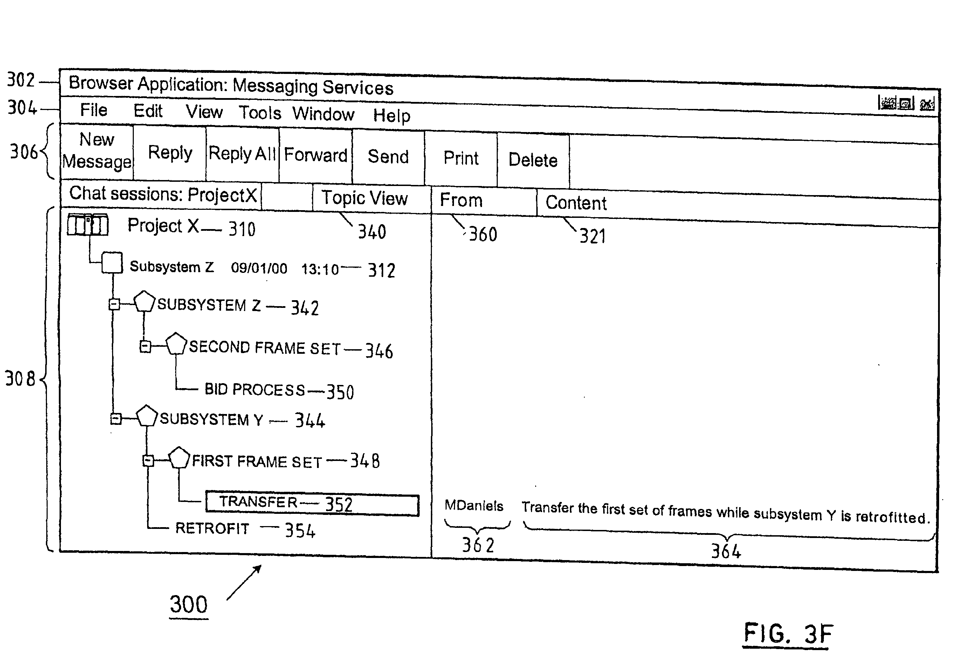

With reference now to **Figure 3F**, a diagram shows a selection of a subtopic within the hierarchical tree structure shown in **Figure 3E**. Subtopic **352** has been selected by the user who is viewing the stored chat session. In response, the application shows user identifier **360** of the user who input the content associated with the selected subtopic within "From" column **362**. In addition, the actual content entered by the user is shown as content **362**.

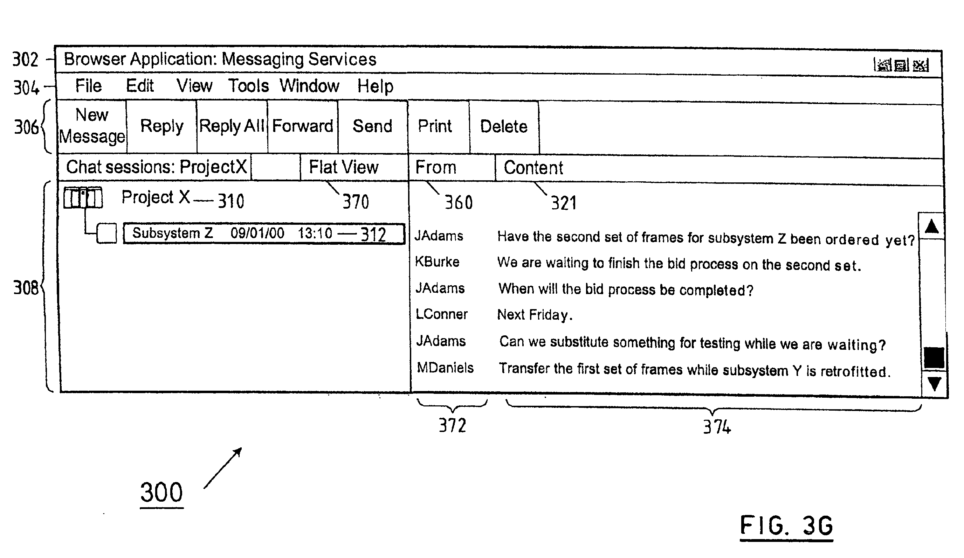

With reference now to **Figure 3G**, a diagram shows a "flat view" of a stored chat session. Rather than showing a hierarchical representation of the stored chat session, the content of the stored chat session can be viewed in a manner similar to that experienced by the original participants to the chat session, which is "flat" in comparison with a hierarchical view. "Flat View" label **370** is displayed in response to an appropriate user action, such as a menu selection, during which a user has selected a flat view of the stored chat session.

In the example in **Figure 3G**, the user has selected chat session **312** for viewing, and the content of the stored chat session has been displayed. The participants of the chat session who authored particular content portions are displayed within "From" column **360**; their user identifiers **372** may be identical to the user identifiers used during the chat session, or the user identifiers may be similar to those shown in **Figure 3A** in which an entire e-mail address for each user is shown. Alternatively, user-defined aliases or nicknames (as defined by the user viewing the chat session) may be used in place of the original user identifiers.

Content sections **374** have been displayed within "Content" column **321**. Each section or portion of the content is associated with the user who authored or input the content. If the content portion contains non-text information, then an appropriate icon or object may be shown to indicate that the content contains non-text material.

As shown in **Figures 3A-3G**, the content of a stored or archived chat session may be viewed in a variety of manners. Before the chat session is saved, however, certain processing options may need to be specified while creating the chat session in order to prepare for storing the chat session. Alternatively, the archiving options may be specified when the chat session is terminated. However, after the chat session is stored, other features for using a stored chat session become possible, including features concerning the initiating of another chat session.

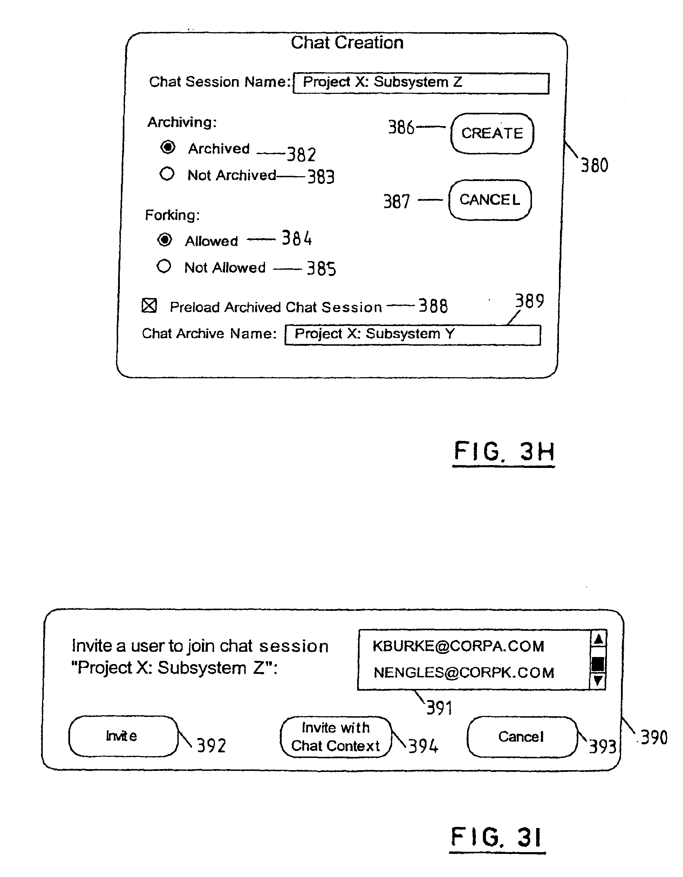

With reference now to **Figure 3H**, a dialog box shows the processing options that are available to a user who wants to initiate a chat session. Window **380** is a dialog box that appears to a user when the user requests to create a chat room or chat session. A creating user may name the chat session using text input field **381**; the entered name may become the name of the archived chat session. Using radio buttons **382-383**, the creator may specify whether or not the chat session is to be archived. Alternatively, a system administrator may have previously specified that it is mandatory that all chat sessions are archived such that an individual user may not specify that the chat session should not be archived.

Using radio buttons **384-385**, the creator may specify whether or not child chat sessions may be forked from the chat session that is being initiated, which would be considered the parent chat session. If so, then each participant would have control options for spawning subordinate chat sessions; if not, then these controls would not appear. Alternatively, the creator of each subordinate chat session may be able to specify whether the subordinate chat session is archived and whether other subordinate chat sessions may be spawned from the subordinate chat session. The chat session is created after the user selects "Create" button **386**, and the user may abort the creation of the chat session using "Cancel" button **387**.

As noted above, after the chat session is stored, other features for using a stored chat session become possible. For example, using "Preload" checkbox **388**, a user may specify the name of an archived chat session in text entry field **389**. When the user selects the "Create" button, the previously stored chat session may be loaded into the chat content area in the chat application. In this manner, the chat session begins with a context for framing a newly revived discussion about a particular issue. Participants in a new chat session may scroll backward (or playback, as appropriate for the type of content) through the archived chat content to refresh their memories about the issue or issues to be discussed in the new chat session.

**Figures 3I-3K**, described below, show another example in which, after the chat session is stored, the stored chat session may be then be advantageously used. As shown in **Figure 2C**, in the prior art, when a user joins a chat session, the user begins the chat session without any context for the chat session, and the user may have missed a significant amount of discussion or may have missed some discussion about a particular issue that has some value or importance to the user.

In other cases, the user may have very little information to decide whether he or she desires to join a particular chat session because only the name of the chat session has been provided along with the invitation to join the chat session. In some cases, a user may join a chat session and then later discover that the chat session has very little interest to the user.

The present invention overcomes these problems by allowing a user to preview the context of a chat session, either an archived chat session or a live chat session, before deciding whether to accept an invitation to join a chat session.

With reference now to **Figure 3I**, a diagram shows an invitation dialog box for requesting a user's participation within a chat session including chat session context in accordance with a preferred embodiment of the present invention. Window **390** is an invitation dialog box that appears when a user has selected a function to invite another user into a chat session. Invitees may be selected from list **391**; one or more invitees may be selected at the same time. "Invite" button **392** sends the invitation to the selected invitees, and "Cancel" button **393** aborts the invitation function.

"Invite with Chat Context" button **394** sends an invitation to the selected invitees, yet button **394** additionally sends a chat context to the invitee or invitees. The invitation function may be invoked either during the creation of a main chat session or during the spawning of a child chat session as is appropriate for the chat event requested by the inviter. Hence, a chat context may be retrieved either from an active chat session or from an archived chat session. By receiving a chat context, the invitee is better able to judge whether to join the chat session. Other options may also be available to the inviter, such as an instant message button for conducting a quick conversation between the inviter and invitee, which might be useful for allowing the inviter to convince the invitee to join the chat session.

With reference now to **Figures 3J-3K**, diagrams show an invitation alert dialog box that requests a user's participation within a chat session in which the dialog box contains a chat session context in accordance with a preferred embodiment of the present invention. **Figure 3J** shows a first version of the dialog box, and **Figure 3K** shows a second version of the dialog box.

Referring to **Figure 3J**, window **395** is an invitation alert dialog box that appears on an invitee's display to invite the user into a chat session. In this example, the inviter has elected to invite the invitee while simultaneously sending the invitee a chat context. Window **395** shows buttons **396** for selecting the type of view of the chat content. In **Figure 3J**, the "Flat View" button is selected, and the flat view of the chat session content is shown in chat content area **397**. "Accept" button 398 allows the invitee to join the chat session, and "Decline" button **399** allows the invitee to decline the invitation to join the chat session.

Referring to **Figure 3K**, window **395** shows the same invitation alert dialog box after the "Topic View" button has been selected. In response, the content in chat content area **397** has been shown in a hierarchical format in a manner similar to that shown in **Figure 3F**. By being able to view a context for a chat session, an invitee has more information for deciding whether to join the chat session. After accepting the invitation to join the chat session, the chat session context can be inserted into the chat content area of the chat session window of the invitee. Alternatively, after the invitee has joined the chat session, the chat context can be resent to the invitee so that the invitee has a full context of the chat session. The format of the chat session context that is sent to an invitee may be the same type of format that is used to archive a chat session.

In some configurations, a distributed chat session may be centrally controlled by executing on a chat server with multiple subordinate chat clients, and an official chat session context may be maintained by the chat server. In that case, a person with control over the computer platform supporting the chat server may have control over all chat sessions and chat session contexts.

It should be noted, however, that if the chat application is executed in client-server architecture, then the chat server may exist on any computer platform with enough computational performance to support clients. For example, if the chat sessions do not demand much performance in the form of computational resources, then the chat server may operate on a portable computing device. Alternatively, in a peer-to-peer type configuration, the chat session could be run equally among chat applications at each peer.

In any case, each chat session may maintain an independent chat session context. Hence, when another user is invited to join a chat session, each chat session client or peer may send its chat session context to the invitee. Alternatively, a chat session client may request that the chat server send the official chat session context to the invitee.

The content of the chat session may be both archived and sent to chat session participants, such as an invitee, in a variety of formats: a simple text file containing line feeds/carriage returns for separating the contributed content of each participant; a proprietary format; or, preferably, a hierarchically formatted file using XML.

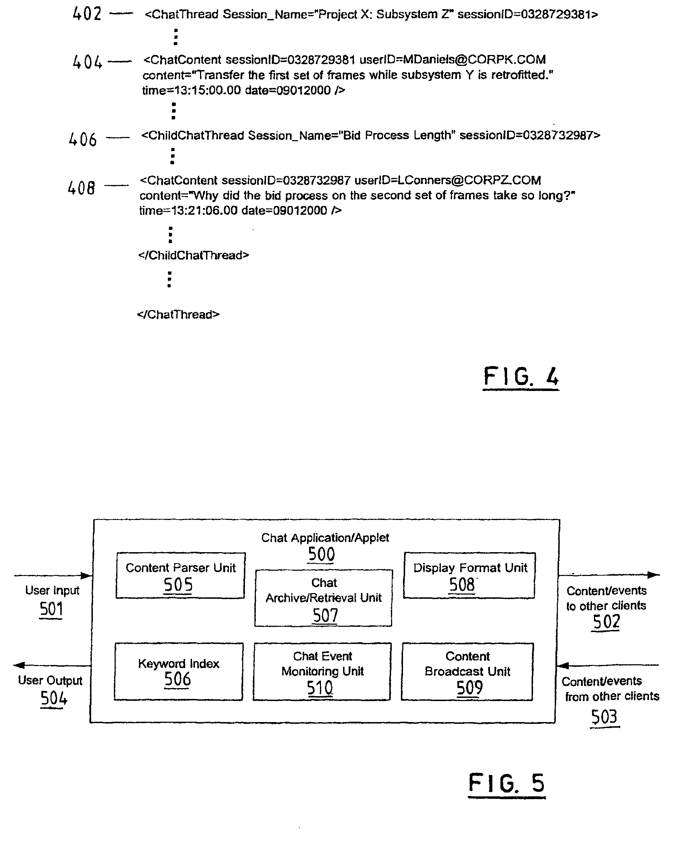

With reference now to **Figure 4**, a figure shows an example of an XML file containing a chat session context that may be transferred between chat session participants or that may be stored when archiving the chat session. XML is used in many data transfer applications, and the definition and construction of XML Document Type Definitions (DTD) are well known in the art. The present invention can rely on the ubiquity of XML tools, such as XML parsers, etc., to format the content of a chat session as an XML document.

**Figure 4** shows an instance of an XML document containing a chat session context. This type of XML document can be generated in real-time while the chat session is progressing, or the document can be generated in a post-processing manner after the completion of the chat session. Each major event within the chat application, such as the creation of a chat session, the addition of a chat session participant, the forking of the chat session, etc., may be recorded as an XML entity or element within the XML document. With an appropriate DTD, an instance of an XML document representing a chat session can be parsed to obtain a hierarchical representation of the chat session and then displayed to the user, such as the hierarchical representations shown in **Figures 3A-3F**.

Element **402** contains the name of the main chat session and associated information. Element **404** is an example of a portion of the chat session content in the main chat session as contributed by a chat session participant. Element **406** records a forking event during which a child chat session is spawned from its parent chat session. Element **408** contains a portion of the chat session content in the child chat session. Other attributes, elements, chat events, etc., may be stored within an XML document representing a record of a chat session.

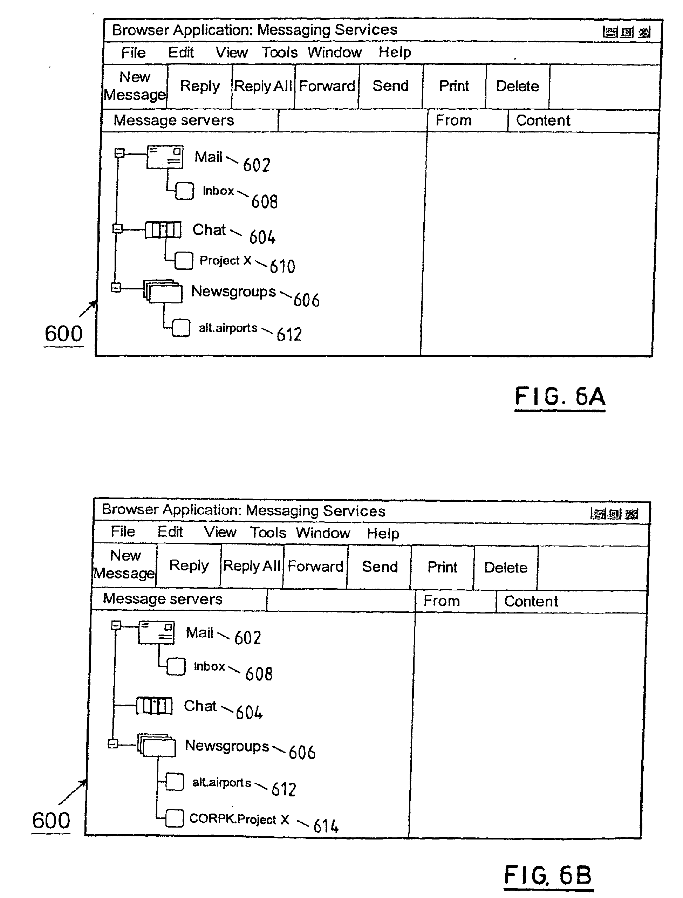

With reference now to **Figure 5**, a block diagram depicts components within a chat application or chat applet. Chat application **500** provides chat-related services to participants of a chat session. Chat application **500** accepts user input **501**, processes the chat content and chat events of the user input, and sends content/events **502** to other chat participants. Chat application **500** accepts content/events **503** from other chat participants, processes the chat content and chat events from the other users, and presents the processed data to the user as user output **504**.

Content parser unit **505** parses the user input to detect keywords entered by the participants by comparing the input to keyword index **506**. The chat application can then use the detected keywords to generate topics and subtopics elements to be placed in the XML representation of the chat content.

Chat archive/retrieval unit **507** stores and retrieves the chat content as necessary, possibly in a variety of formats. Display format unit **508** processes any data to be presented to a chat participant, which might include marking content or user identifiers with graphical symbols, etc.

The chat application may be operational with a variety of networks. Content broadcast unit **509** formats chat content/events for broadcast to other chat participants or alternatively transmits chat content/events to a chat server.

In order to generate a hierarchically organised chat session context, the chat application must keep track of numerous events, such as the joining and disjoining of participants within the chat session, the opening and closing of chat rooms and whether those rooms have been forked from other rooms, etc. Chat event monitoring unit **510** receives user events, such as invitation requests or participant additions, and records these events within the chat session context.

As noted previously, different types of communication services have different advantages within different contexts. The exchange of newsgroup messages, e-mail messages, chat session messages, and instant messages occur over varying time periods, yet each type of message has similarities.

Many commercially available browsers and e-mail applications allow a user to view newsgroup messages in conjunction with e-mail messages. By noting these similarities, the present invention also enables chat session messages to be used within a messaging or communication application in a manner similar to e-mail messages and newsgroup messages. Hence, another useful purpose for a stored chat session, as provided by the present invention, is the storage of a chat session within a newsgroup. Referring again to **Figures 3A-3G**, one may now understand the significance of displaying the hierarchically organised content from a chat session within a messaging application or applet.

With reference now to **Figures 6A-6B**, graphical user interface windows specifically show a manner in which a messaging application may be used to display e-mail messages, newsgroup messages, and chat session messages. Window **600** contains representations of mail server **602**, chat server **604**, and newsgroup server **606**. In **Figure 6A**, mail server **602** contains inbox **608**; chat server **604** contains session **610**; and newsgroup server **606** contains thread **612**, but other mail boxes, session, and threads could be included.

In **Figure 6B**, chat session **610** has been moved to become newsgroup **614**. An archived chat session may be required to be reformatted before it can be stored as a newsgroup. Appropriate security restrictions may be imposed to prevent a chat session containing sensitive data from being converted into an open discussion thread in a newsgroup. Discussion topics and subtopics can then be operated like discussion threads and sub threads within the newsgroup. Similarly, parent chat sessions and child chat sessions can then be operated like discussion threads and subthreads within the newsgroup. The archived chat session can be moved to the newsgroup under manual direction by a user who perhaps has special privileges. Alternatively, it can be moved automatically by the system under the guidance of selected optional rules, such as the age of the archived chat session.

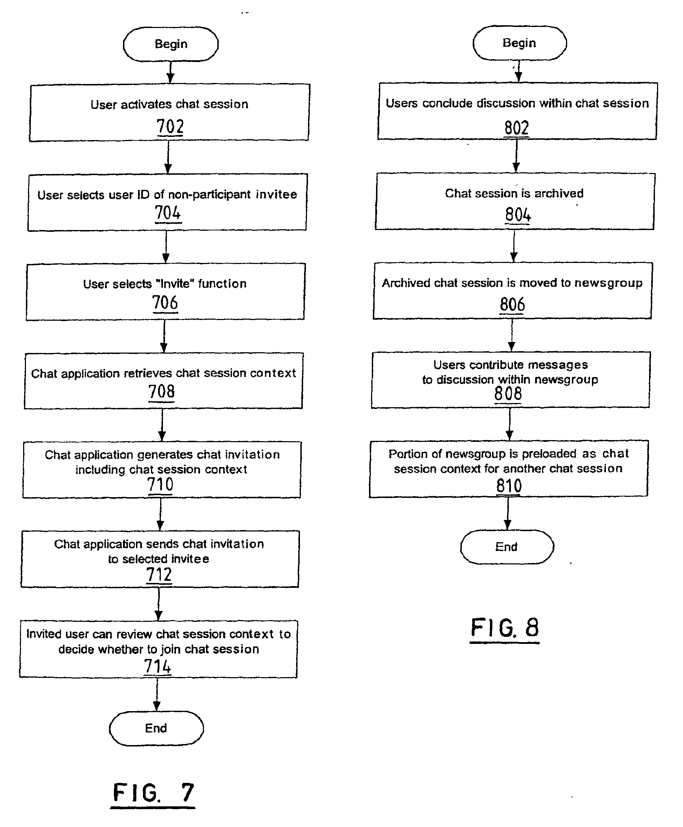

With reference now to **Figure 7**, a flowchart depicts a method for using a chat session context in a chat session invitation that is sent to a non-participant user in accordance with a preferred embodiment of the present invention. The process begins when a user activates a chat session (step **702**). The chat session may be activated in a manner that is appropriate to the discussion context, either through an Internet telephony call, an instant message, creating a chat room, etc.

The user then selects a user identifier of a non-participant invitee to the chat session (step **704**). If the chat session is to be an instant messaging session, then the invitee would be the second participant to the chat session. Otherwise, the chat session may have been in progress for some amount of time before the invitee is chosen. The user then invokes an "Invite" function within the chat application in a manner that is appropriate to the chat application and the user interface available to the user (step **706**). For example, the selections of the user identifier of the invitee and the invite function may be performed through voice commands in an Internet-enabled phone or wireless PDA device using voice recognition, etc.

In response, the chat application retrieves the chat session context (step **708**). The chat session context may be retrieved either from an active chat session or from an archived chat session. The chat application then generates the chat invitation request that includes the retrieved chat session context (step **710**). The chat application then sends the chat invitation to the selected invitee (step **712**).

The invitee may then review the chat session context in the chat invitation to decide whether to accept or to decline the chat invitation (step **714**). If the user accepts the invitation, then a chat application or applet is started on the invitee's device, or if the invitee is already running a chat application, then the invitee becomes a participant in the chat session to which the invitee was invited. It should be noted that the format of the chat invitation request may vary. For example, the chat invitation request might by an XML document, or the chat invitation request could include a Java applet, Microsoft ActiveX control, scripting code, etc., such that the receiving user is able to interact with the chat invitation in some manner, such as reviewing the contents of the chat session context in a variety of views and methods.

With reference now to **Figure 8**, a flowchart depicts a method for storing a chat session context within a newsgroup so that a discussion may continue by using newsgroup messages in accordance with a preferred embodiment of the present invention. The process begins when a set of users have decided to conclude their discussion within an active chat session (step **802**). The chat session may be concluded in a manner which is appropriate for the user interface of the users or of the user that controls the active chat session.

The chat session is then archived in an appropriate manner (step **804**). For example, the chat session context may be post-processed to place the chat session content and chat application events into an XML document, or if the chat session was already being processed in real-time, then archiving the chat session context may only require storing the formatted chat session context.

At some later point in time, the archived chat session is moved to a newsgroup (step **806**). Alternatively, the chat session may be archived by storing it immediately into a newsgroup. When stored in the newsgroup, the chat session context for the stored chat session may become a distinct newsgroup thread. Alternatively, when stored in the newsgroup, chat session messages from each user may become distinct threads within the newsgroup. Alternatively, discussion topics and subtopics from the chat session context may become distinct threads and subthreads within the newsgroup.

Users with access to the newsgroup may then contribute messages to the archived chat session within the newsgroup (step **808**), thereby extending an ongoing discussion that may have been commenced within a chat session. Then, at some later point in time, a user may use the archived chat session, or merely a portion of it, as a chat session context by preloading it into a chat application (step **810**). Participants in the chat session may then review the preloaded context to improve and focus the discussion within the chat session.

The advantages of the present invention should be apparent in view of the detailed description of the invention that is provided above. Discussions about particular issues tend to develop over time, whether the discussions take place by telephone or by electronic messages. People tend to pick a communication medium based on the expectations about the importance of a given discussion and the amount and type of information to be exchanged between participants in a discussion.

Chat sessions are usually convened amongst multiple users for short, impromptu discussions about a particular issue. Chat sessions are generally expected not to involve the exchange of copious amounts of information nor to endure for long periods of time. Hence, chat services have lacked methodologies for using chat sessions in ways other than short duration message exchanges.

The present invention allows a chat session to be stored for later use. In addition, a chat session context, whether from an active chat session or from an archived chat session, can be sent to invited participants to provide the invitees with information for deciding whether or not to join in a chat session. The chat session context can be formatted in a variety of ways such that the user can focus attention on pertinent information and extract that information from the chat session context.

By archiving a chat session, the chat session context can be reused. For example, a chat session context may be archived so that the participants may perform actions that were discussed in the chat session. At some later point in time, the users may decide to reconvene in a chat session to discuss an ongoing issue. Rather than start another chat session, a previously archived chat session context can be reloaded, thereby allowing the users to refresh their memories by reviewing the chat session context and to refer to previous portions of the discussion as saved within the chat session context.

By relocating an archived chat session to a newsgroup, both participants to the chat session and non-participants may review the contents of the chat session. Users may then contribute additional messages to the newsgroup over time, thereby extending the original discussion from the chat session and expanding the amount of information within the archived chat session context. For example, a non-participant to the original chat session may not only review the chat session but also contribute information that may have been missing from the original discussion. As another example, the original participants may have agreed within the original chat session to report their progress on specific issues to the newsgroup-posted chat session. In this manner, users may perform real actions over time and then report their actions and results by posting new messages to the archived chat session within the newsgroup. In addition, the newsgroup provides a manner for extending an original chat session by spawning more chat sessions over time. For example, a subset of participants from the original chat session may reconvene to discuss one particular issue amongst many outstanding issues from the original chat session. In order to focus on one particular issue, this subset of participants can reload a portion of the original chat session that is archived within the newsgroup as a chat session context for the new discussion. Assuming that the chat session context is organized as a hierarchy of topics and subtopics, the subset of users can load a single subtopic from the original chat session. After the discussion is concluded, the extended discussion of the subtopic is then incorporated into the archived chat session within the newsgroup. Non-participants to the discussion of the subtopic may later review the new discussion stored within the newsgroup.

It is important to note that while the present invention has been described in the context of a fully functioning data processing system, those of ordinary skill in the art will appreciate that the processes of the present invention are capable of being distributed in the form of instructions in a computer readable medium and a variety of other forms, regardless of the particular type of signal bearing media actually used to carry out the distribution. Examples of computer readable media include media such as EPROM, ROM, tape, paper, floppy disc, hard disk drive, RAM, and CD-ROMs and transmission-type media, such as digital and analog communications links.

The description of the present invention has been presented for purposes of illustration but is not intended to be exhaustive or limited to the disclosed embodiments. Many modifications and variations will be apparent to those of ordinary skill in the art. The embodiments were chosen to explain the principles of the invention and its practical applications and to enable others of ordinary skill in the art to understand the invention in order to implement various embodiments with various modifications as might be suited to other contemplated uses.

## Claims

1. An apparatus for executing a chat session in a distributed data processing system, the chat session having one or more participating users in the chat session, the apparatus comprising:
means for selecting (394) a user identifier of a user who is not a participant in the chat session;
means for generating a chat session invitation to the selected user; and
means for sending the chat session invitation to the selected user; **characterised by** the apparatus comprising:
means for retrieving a chat session context for the chat session, the chat session context including previous portions of the chat, the means for generating a chat session invitation including the retrieved chat session context with the chat session invitation.

2. The apparatus of claim 1 further comprising:
means for receiving the chat session invitation;
first presenting means for presenting the chat session context from the chat session invitation; and
means for responding to the chat session invitation after reviewing the presented chat session context.

3. The apparatus of claim 2 further comprising:
second presenting means for presenting the chat session context as a hierarchically organized tree in which participating users in the chat session are represented as nodes of the tree and in which branches in the tree represent related chat sessions.

4. The apparatus of claim 2 further comprising:
third presenting means for presenting the chat session context as a hierarchically organized tree in which discussion topics in the chat session are represented as nodes of the tree and in which branches in the tree represent related chat topics.

5. The apparatus of claim 2 further comprising:
joining means for joining the selected user to the chat session in response to the user accepting the chat session invitation.

6. The apparatus of claim 1 wherein the chat session context is an Extensible Markup Language, XML, document.

7. The apparatus of claim 1 wherein the chat session context comprises chat session content and chat session events generated in response to actions by users participating in the chat session.

## Patentansprüche

1. Vorrichtung für die Durchführung einer Chat-Sitzung in einem verteilten Datenverarbeitungssystem, wobei die Chat-Sitzung über einen oder mehrere an ihr teilnehmende Benutzer verfügt, wobei die Vorrichtung Folgendes umfasst:
ein Mittel für die Auswahl (394) eines Benutzerbezeichners eines Benutzers, der nicht an der Chat-Sitzung teilnimmt;
ein Mittel für die Erzeugung einer Chat-Sitzungseinladung für den ausgewählten Benutzer; und
ein Mittel für das Senden der Chat-Sitzungseinladung an den ausgewählten Benutzer; **dadurch gekennzeichnet, dass** die Vorrichtung Folgendes umfasst:
ein Mittel für den Abruf eines Chat-Sitzungskontextes für die Chat-Sitzung, wobei der Chat-Sitzungskontext frühere Teile des Chats beinhaltet, wobei das Mittel die Erzeugung einer Chat-Sitzungseinladung den abgerufenen Chat-Sitzungskontext mit der Chat-Sitzungseinladung beinhaltet.

2. Vorrichtung nach Anspruch 1, die weiter Folgendes umfasst:
ein Mittel für den Empfang der Chat-Sitzungseinladung;
ein erstes Darstellungsmittel für die Darstellung des Chat-Sitzungskontextes aus der Chat-Sitzungseinladung; und
ein Mittel für die Beantwortung der Chat-Sitzungseinladung nach der Überprüfung des angezeigten Chat-Sitzungskontextes.

3. Vorrichtung nach Anspruch 2, die weiter Folgendes umfasst:
ein zweites Darstellungsmittel für die Darstellung des Chat-Sitzungskontextes als eine hierarchisch geordnete Baumstruktur, bei der an der Chat-Sitzung teilnehmende Benutzer als Knoten des Baums dargestellt werden und bei der Zweige des Baums für zugehörige Chat-Sitzungen stehen.

4. Vorrichtung nach Anspruch 2, die weiter Folgendes umfasst:
ein drittes Darstellungsmittel für die Darstellung des Chat-Sitzungskontextes als hierarchisch geordnete Baumstruktur, bei der Diskussionsthemen der Chat-Sitzung als Knoten des Baums dargestellt werden und bei der Zweige des Baums für zugehörige Chat-Themen stehen.

5. Vorrichtung nach Anspruch 2, die weiter Folgendes umfasst:
ein Verbindungsmittel für die Verbindung des ausgewählten Benutzers mit der Chat-Sitzung als Reaktion darauf, dass der Benutzer die Chat-Sitzungseinladung annimmt.

6. Vorrichtung nach Anspruch 1, wobei der Chat-Sitzungskontext ein XML-Dokument (Extensible Markup Language) ist.

7. Vorrichtung nach Anspruch 1, wobei der Chat-Sitzungskontext Chat-Sitzungsinhalt und Chat-Sitzungsereignisse umfasst, die als Reaktion auf Aktionen von Benutzern erzeugt werden, die an der Chat-Sitzung teilnehmen.

## Revendications

1. Dispositif destiné à exécuter une session de bavardage dans un système de traitement de données réparti, la session de bavardage comportant un ou plusieurs utilisateurs participant à la session de bavardage, le dispositif comprenant :
un moyen destiné à sélectionner (394) un identificateur d'utilisateur d'un utilisateur qui n'est pas un participant à la session de bavardage,
un moyen destiné à générer une invitation à la session de bavardage pour l'utilisateur sélectionné, et
un moyen destiné à envoyer l'invitation à la session de bavardage à l'utilisateur sélectionné,
**caractérisé par le fait que** le dispositif comprend :
un moyen destiné à récupérer un contexte de session de bavardage pour la session de bavardage, le contexte de session de bavardage comprenant des parties précédentes du bavardage, le moyen destiné à générer une invitation à la session de bavardage comprenant le contexte de session de bavardage récupéré avec l'invitation à la session de bavardage.

2. Dispositif selon la revendication 1, comprenant en outre :
un moyen destiné à recevoir l'invitation à la session de bavardage,
un premier moyen de présentation destiné à présenter le contexte de session de bavardage à partir de l'invitation à la session de bavardage, et
un moyen destiné à répondre à l'invitation à la session de bavardage après examen du contexte de session de bavardage présenté.

3. Dispositif selon la revendication 2, comprenant en outre :
un second moyen de présentation destiné à présenter le contexte de session de bavardage sous la forme d'une arborescence organisée de manière hiérarchique dans laquelle les utilisateurs participant à la session de bavardage sont représentés par des noeuds de l'arborescence et dans laquelle les ramifications de l'arborescence représentent les sessions de bavardage associées.

4. Dispositif selon la revendication 2, comprenant en outre :
un troisième moyen de présentation destiné à présenter le contexte de session de bavardage sous la forme d'une arborescence organisée de manière hiérarchique dans laquelle les sujets de discussion dans la session de bavardage sont représentés sous la forme de noeuds de l'arborescence et dans laquelle les ramifications dans l'arborescence représentent des sujets de bavardage associés.

5. Dispositif selon la revendication 2, comprenant en outre :
un moyen d'adhésion destiné à faire en sorte que l'utilisateur sélectionné se joigne à la session de bavardage en réponse au fait que l'utilisateur accepte l'invitation à la session de bavardage.

6. Dispositif selon la revendication 1, dans lequel le contexte de session de bavardage est un document en langage de balisage étendu, XML.

7. Dispositif selon la revendication 1, dans lequel le contexte de session de bavardage comprend un contenu de la session de bavardage et des événements de la session de bavardage générés en réponse à des actions par les utilisateurs participant à la session de bavardage.
